# FASCICULE DE BREVET EUROPEEN

(11) **EP 3 934 980 B1**
(45) Date de publication et mention de la délivrance du brevet: **29.03.2023**
(21) Numéro de dépôt: 20706523.6
(22) Date de dépôt: 28.02.2020
(51) Int. Cl.: B64D 11/06, B60N 2/07, B60N 2/16, B60N 2/02

(54) **SIÈGE D'AÉRONEF MUNI D'UNE CRÉMAILLÈRE MONTÉE SUR UNE PORTION DÉFORMABLE**
FLUGZEUGSITZ MIT EINEM AUF EINEM VERFORMBAREN TEIL MONTIERTEN GESTELL
AIRCRAFT SEAT PROVIDED WITH A RACK MOUNTED ON A DEFORMABLE PORTION

(30) Priorité: 08.03.2019 FR 1902363
(43) Date de publication de la demande: 12.01.2022
(73) Titulaire: Safran Seats, 78370 Plaisir (FR)
(72) Inventeur: CHERON, Christophe, 36150 AIZE (FR); LESUEUR, Ronan, 36100 ISSOUDUN (FR); VERNY, Christian, 36100 ISSOUDUN (FR)
(74) Mandataire: Marconnet, Sébastien
(86) Numéro de dépôt international: PCT/EP2020/055305
(87) Numéro de publication internationale: WO 2020/182493

(56) Documents cités:
- EP-A2- 0 385 289
- DE-A1- 3 409 582
- DE-A1- 4 216 300

## Description

La présente invention porte sur un siège d'aéronef muni d'une crémaillère montée sur une portion déformable. L'invention trouve une application particulièrement avantageuse, mais non exclusive, avec les sièges de pilotage pour un avion ou un hélicoptère. EP 0 385 289 montre un siège de véhicule comportant un rail de guidage, une crémaillère, un actionneur muni d'un pignon porté par un arbre, ledit pignon engrenant avec la crémaillère, et au mains une portion de liaison assurant une liaison mécanique entre le rail de guidage et la crémaillère, la portion de liaison comportant une zone de faiblesse mécanique.

De façon connue en soi, un siège d'aéronef comporte des rails fixés sur un plancher suivant lesquels le siège peut se déplacer pour permettre au pilote d'ajuster sa position par rapport au poste de pilotage. Afin d'assurer un déplacement automatique du siège, il est possible de prévoir un actionneur électrique muni d'un pignon monté sur un arbre. Le pignon engrène avec une crémaillère solidaire d'un rail de guidage.

Lors de tests d'homologation, une contrainte est appliquée au plancher au cours d'une phase de déformation dite de "pitch and roll" en anglais. Cela a pour effet de déformer la structure de siège et de déplacer l'actionneur correspondant engendrant un désengrènement du pignon par rapport à la crémaillère. Le contrôle du déplacement du siège est alors perdu, ce qui pose un problème sécuritaire.

L'invention vise à remédier efficacement à cet inconvénient en proposant un siège d'aéronef comportant:
- un rail de guidage,
- une crémaillère,
- un actionneur muni d'un pignon porté par un arbre, ledit pignon engrenant avec la crémaillère,
- au moins une portion de liaison assurant une liaison mécanique entre le rail de guidage et la crémaillère,
caractérisé en ce que la portion de liaison comporte une zone de faiblesse mécanique et en ce qu'un premier élément d'appui et un deuxième élément d'appui sont disposés de part et d'autre de la crémaillère, de sorte qu'en cas de déformation du siège engendrant un déplacement du pignon, ledit pignon ou l'arbre correspondant vient en appui contre un des éléments d'appui, notamment en fonction d'un sens de déplacement dudit pignon, de façon à déformer la portion de liaison suivant la zone de faiblesse mécanique.

L'invention permet ainsi de garantir l'engrènement du pignon de l'actionneur avec la crémaillère malgré la déformation du siège, dans la mesure où la portion de liaison est déformée de façon à ce que la crémaillère suive un déplacement de l'actionneur engendré par la déformation du siège. On s'assure ainsi que les dents du pignon restent en prise avec les dents de la crémaillère lors de la déformation du siège.

Selon une réalisation, le premier élément d'appui est une plaquette de retenue ayant une portion superposée axialement avec le pignon.

Selon une réalisation, le deuxième élément d'appui est une plaque munie d'une rainure de guidage apte à assurer un guidage d'une extrémité de l'arbre portant le pignon.

Selon une réalisation, le deuxième élément d'appui, la portion de liaison, et le rail de guidage forment une seule et même pièce.

Selon une réalisation, l'actionneur est fixé sur une embase du siège par l'intermédiaire d'au moins un plot amortisseur.

Selon une réalisation, un plot amortisseur comporte une portion élastique pour absorber une énergie mécanique suivant une direction verticale.

Selon une réalisation, un plot amortisseur comporte une portion élastique annulaire disposée dans une ouverture de passage d'un organe de fixation de l'actionneur, de façon à pouvoir absorber une énergie mécanique suivant une direction longitudinale et/ou une direction transversale.

Selon une réalisation, un organe de guidage en translation comporte des rouleaux coopérant chacun avec une face inclinée du rail de guidage ayant une section transversale en forme de V.

Selon une réalisation, ledit siège d'aéronef comporte un dispositif de réglage en hauteur.

Selon une réalisation, le dispositif de réglage en hauteur comporte deux paires de croisillons munis d'extrémités coopérant avec des flasques supérieurs et des flasques inférieurs dudit siège.

Selon une réalisation, la zone de faiblesse mécanique est obtenue par un retrait local de matière dans une épaisseur de la portion de liaison.

L'invention a également pour objet un aéronef comportant un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective de la partie avant d'un siège d'aéronef selon la présente invention;
[Fig. 2] La figure 2 est une vue en perspective de la partie arrière d'un siège d'aéronef selon la présente invention;
[Fig.3] La figure 3 est une vue en perspective détaillée de la structure d'assise du siège selon l'invention;
[Fig. 4] La figure 4 est une vue en coupe détaillée de la zone dans laquelle le pignon de l'actionneur engrène avec la crémaillère d'un système de déplacement en translation du siège selon l'invention;
[Fig. 5] La figure 5 est une vue en perspective détaillée de la zone dans laquelle le pignon de l'actionneur engrène avec la crémaillère du système de déplacement en translation du siège selon l'invention;
[Fig. 6] La figure 6 est une vue en coupe d'un organe de guidage engrenant avec un rail de siège d'aéronef selon la présente invention;
[Fig. 7a] La figure 7a est une vue en perspective des plots amortisseurs utilisés pour assurer la fixation entre l'actionneur portant le pignon engrenant avec la crémaillère et l'embase du siège selon l'invention;
[Fig. 7b] La figure 7b est une vue en perspective des plots amortisseurs sans certains organes de fixation de façon à faire apparaître les portions élastiques desdits plots;
[Fig. 8a] [Fig 8b] Les figures 8a et 8b sont des vues en coupe illustrant le déplacement de l'actionneur lorsque le siège subit des contraintes suivant deux directions de déplacement opposées l'une par rapport à l'autre.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, les termes relatifs de type "haut", "bas", "avant", "arrière" sont entendus par référence au sens commun que leur donnerait une personne installée dans le siège. Une direction longitudinale X s'étend de manière rectiligne de l'arrière vers l'avant du siège. Une direction transversale Y est perpendiculaire à la direction longitudinale X tout en se situant dans un plan horizontal. Une direction verticale Z est perpendiculaire au plan formé par les directions longitudinale X et transversale Y.

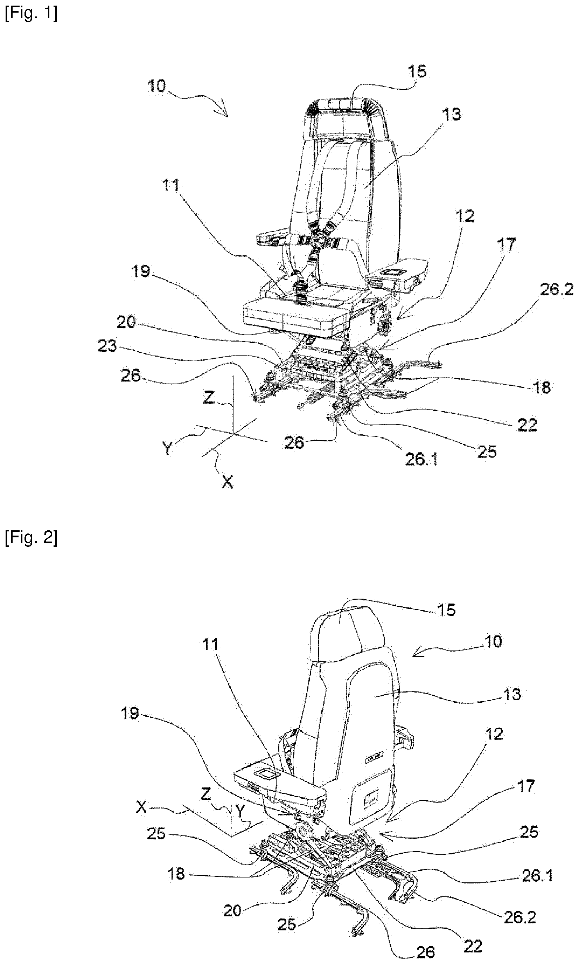

Les figures 1, 2, et 3 montrent un siège d'aéronef 10 comportant notamment une assise 11 montée sur une structure d'assise 12, un dossier 13, et un repose-tête 15. La structure d'assise 12 comporte un dispositif de réglage en hauteur 17 muni de deux paires de croisillons 18 en forme de X montées entre deux flasques supérieurs 19 et deux flasques inférieurs 20 fixés sur une embase 22. L'embase 22 présente notamment une forme de plaque ouverte dans sa partie centrale. Les croisillons 18 de chaque paire sont articulés l'un par rapport à l'autre dans leur portion centrale.

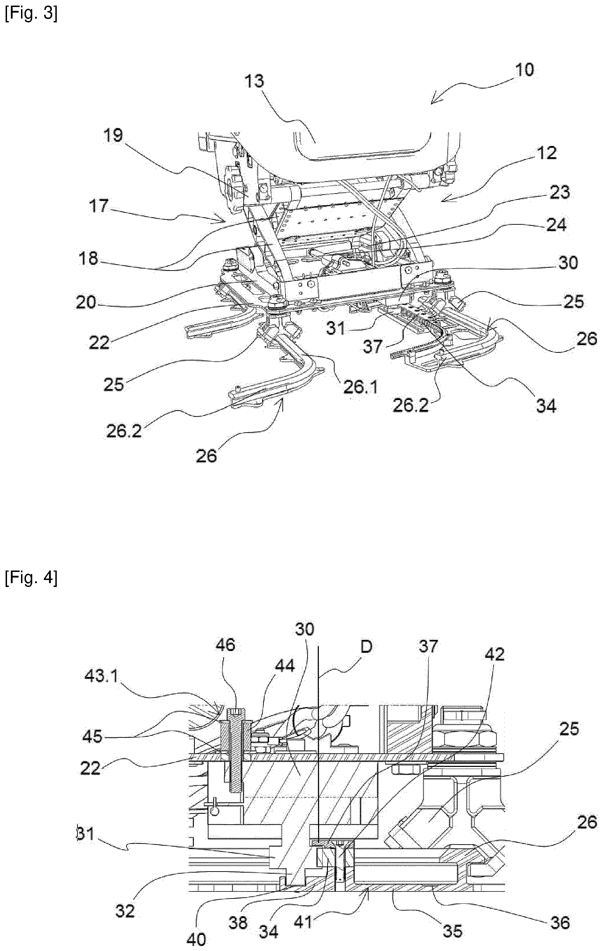

Les extrémités arrière des croisillons 18 sont liées en rotation uniquement par rapport aux flasques inférieurs 20 et aux flasques supérieurs 19. Les extrémités avant des croisillons 18 sont liées en rotation et en translation suivant des rainures de guidage 23 ménagées respectivement dans les flasques supérieurs 19 et les flasques inférieurs 20, tel que montré sur la figure 3. Autrement dit, il existe une liaison de type pivot glissant entre les extrémités avant des croisillons 18 et les flasques 19, 20 de la structure d'assise 12. Le déplacement en hauteur du siège 10 pourra être limité au moyen de butées disposées en partie avant des flasques supérieurs 19, à une extrémité des rainures de guidage 23.

Alternativement, la structure pourra bien entendu être inversée sans que cela affecte le fonctionnement du système, c'est-à-dire que les liaisons pivots pourront être disposées du côté des extrémités avant des croisillons 18 tandis que les liaisons de type pivot glissant pourront être disposées du côté des extrémités arrière des croisillons 18.

Afin d'assurer un déplacement automatique du siège 10 du haut vers le bas, un actionneur mécanique 24 à vérin est disposé entre les extrémités inférieures des croisillons 18, comme on peut le voir sur la figure 3. Le fonctionnement de l'actionneur 24 pourra être contrôlé par le pilote.

Par ailleurs, l'embase 22 porte des organes de guidage 25 en translation coopérant chacun avec un rail de guidage 26 correspondant fixé sur le plancher de l'aéronef. En l'occurrence, on utilise ici quatre rails 26 de guidage mais il serait bien entendu possible d'utiliser plus ou moins de quatre rails 26 de guidage. Comme on peut le voir sur les figures 1 à 3, un rail 26 comporte une portion rectiligne 26.1 correspondant à une zone d'utilisation du siège 10 suivant laquelle le siège 10 peut être déplacé de plus ou moins une longueur de réglage, notamment comprise entre 50mm et 80mm et valant de l'ordre de 65mm, par rapport à une position intermédiaire de référence.

Un rail 26 comporte également une portion courbe 26.2 dans laquelle est situé le siège 10 lorsqu'il se trouve dans une position stockée. Le siège 10 est alors dégagé par rapport au poste de pilotage. Étant donné que la portion courbe 26.2 correspondant à la position stockée du siège 10 n'est pas soumise aux mêmes contraintes de fonctionnement que la portion rectiligne 26.1 correspondant à la zone d'utilisation du siège 10, la portion courbe 26.2 du rail 26 pourra être réalisée dans un matériau différent, notamment moins résistant que la portion rectiligne 26.1 du rail 26. On diminue ainsi le coût du système. Suivant un exemple de réalisation particulier, la portion rectiligne 26.1 du rail 26 est réalisée dans un matériau à base d'acier, tandis que la portion courbe 26.2 est réalisée dans un matériau à base d'aluminium.

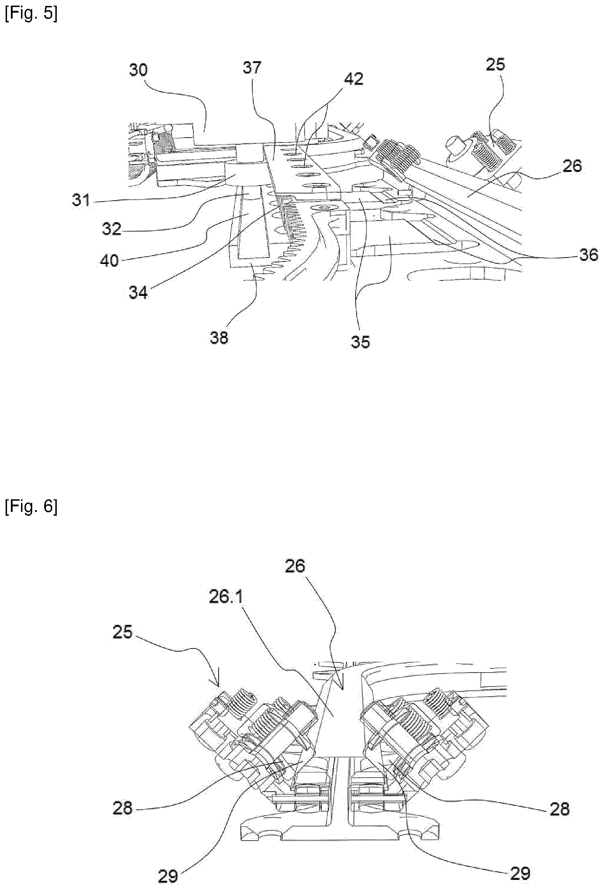

Comme cela est illustré par la figure 6, un organe de guidage 25 en translation comporte des rouleaux 28 coopérant chacun avec une face inclinée 29 du rail de guidage 26 présentant une section transversale en forme de V. La pointe du V est située au-dessus du rail de guidage 26. Une telle configuration du rail 26 et de l'organe de guidage 25 permet d'assurer un meilleur centrage de l'organe de guidage 25 par rapport au rail 26 tout en limitant le jeu suivant la direction transversale Y.

Afin d'assurer un déplacement automatique du siège 10 en translation suivant la direction longitudinale X, on prévoit un actionneur 30 muni d'un pignon 31 porté par un arbre 32, tel que cela est bien visible en figures 4 et 5 notamment. Le pignon 31 pourra être monobloc avec l'arbre 32 ou rapporté et fixé sur l'arbre 32. Le pignon 31 engrène avec une crémaillère 34 solidaire d'un rail de guidage 26. A cet effet, au moins une portion de liaison 35 assure une liaison mécanique entre le rail de guidage 26 et la crémaillère 34. En l'occurrence, on distingue deux portions de liaison 35 mais ce nombre pourra bien entendu varier en fonction de l'application.

La portion de liaison 35 comporte une zone de faiblesse mécanique 36 pour permettre la déformation de la portion de liaison 35 suivant ladite zone de faiblesse mécanique 36 lorsque le siège 10 est soumis à une contrainte mécanique, notamment de type "pitch and roll". La zone de faiblesse mécanique 36 s'étend suivant la direction longitudinale X. La zone de faiblesse mécanique 36 est de préférence obtenue par un retrait local de matière dans une épaisseur de la portion de liaison 35. En variante, il serait possible de réaliser la zone de faiblesse mécanique 36 dans un matériau moins résistant que le reste de la pièce.

En outre, un premier élément d'appui 37 et un deuxième élément d'appui 38 sont disposés de part et d'autre de la crémaillère 34.

Le premier élément d'appui 37 est une plaquette de retenue 37. La plaquette de retenue 37 comporte une portion superposée axialement avec le pignon 31. Ainsi, au moins une droite D parallèle à l'axe du pignon 31 coupe le pignon 31 ainsi qu'une portion de la plaquette de retenue 37, tel que cela est illustré par la figure 4. La plaquette de retenue 37 présente une longueur sensiblement égale à celle de la portion rectiligne 26.1 de la crémaillère 34. Par "sensiblement égal", on entend le fait qu'il peut exister une variation de plus ou moins 10% entre ces deux longueurs. La plaquette de retenue 37 présente une largeur supérieure à celle de la portion rectiligne 26.1 de la crémaillère 34 pour obtenir la superposition axiale avec le pignon 31.

Comme on peut le voir sur la figure 5 notamment, le deuxième élément d'appui 38 est une plaque munie d'une rainure de guidage 40 pour permettre un guidage d'une extrémité de l'arbre 32 portant le pignon 31 en cas de déformation de la portion de liaison 35. La rainure de guidage 40 pourra comporter une partie rectiligne comme cela est représenté et/ou une partie incurvée. La plaque 38 présente une longueur sensiblement égale à celle de la portion rectiligne 26.1 de la crémaillère 34. La plaque 38 présente une largeur supérieure à celle de la portion rectiligne 26.1 de la crémaillère 34 pour obtenir une superposition axiale avec le pignon 31.

Le deuxième élément d'appui 38, la portion de liaison 35, et le rail de guidage 26 forment avantageusement une seule et même pièce 41, comme cela est illustré par la figure 4. La fixation de la crémaillère 34 et de la plaquette de retenue 37 sur cette pièce 41 pourra être effectuée au moyen d'organes de fixation 42, tels que des vis, insérées dans des trous de fixation ménagés dans la plaquette de retenue 37, la crémaillère 34, et la pièce 41. La crémaillère 34 est alors montée serrée entre la pièce 41 et la plaquette de retenue 37.

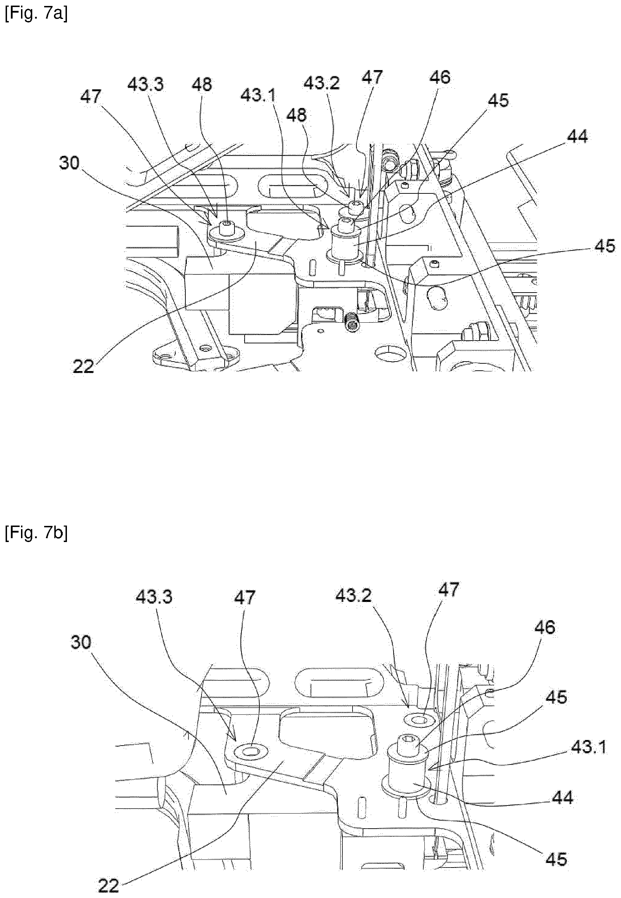

Avantageusement, pour limiter les efforts subis par la crémaillère 34 en cas de déformation, l'actionneur 30 est fixé sur l'embase 22 du siège 10 par l'intermédiaire d'au moins un plot amortisseur 43, tel que cela est illustré par les figures 7a et 7b. En l'occurrence, on utilise trois plots amortisseurs 43.1, 43.2, 43.3 mais leur nombre pourra bien entendu varier en fonction de l'application et en particulier en fonction des contraintes mécaniques auxquelles est soumis le siège 10. Le plot amortisseur 43.1 comporte une portion élastique 44 montée serrée entre deux rondelles 45 au moyen d'un organe de fixation 46, tel qu'une vis, de façon à pouvoir absorber une énergie mécanique suivant la direction verticale Z. La portion élastique 44 présente une hauteur plus grande que son diamètre.

Les plots amortisseurs 43.2, 43.3 comportent chacun une portion élastique annulaire 47 disposée dans une ouverture de passage d'un organe de fixation 48 de l'actionneur 30, de façon à pouvoir absorber une énergie mécanique suivant une direction longitudinale X et/ou une direction transversale Y. La portion élastique 47 présente un diamètre plus grand que son épaisseur. Suivant un exemple de réalisation, les portions élastiques des plots 43.1, 43.2, 43.3 pourront être réalisées notamment en caoutchouc ou dans un matériau synthétique de type polymère par exemple.

En fonctionnement nominal, c'est-à-dire lorsque le siège 10 ne subit aucune déformation, il existe un jeu fonctionnel entre le pignon 31 et chaque élément d'appui 37, 38.

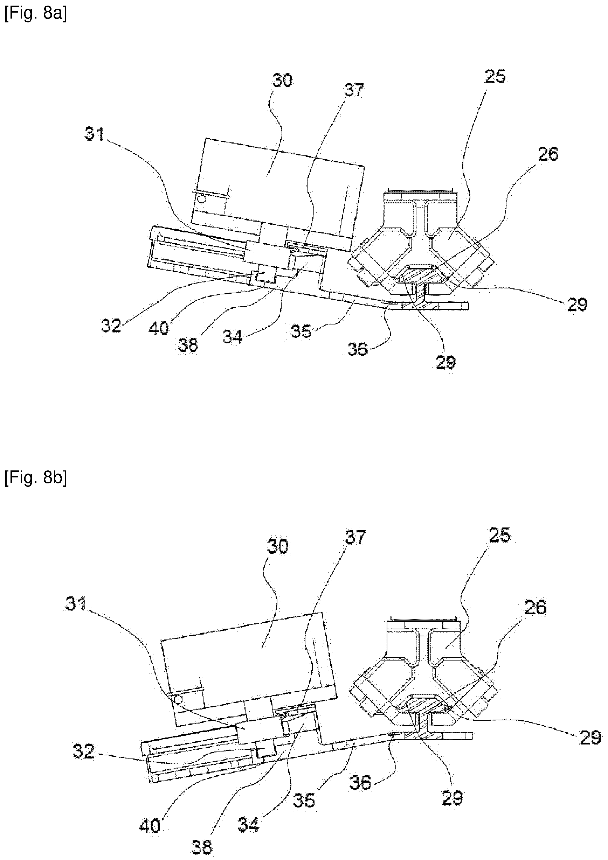

On décrit ci-après, en référence avec les figures 8a et 8b, le fonctionnement du système en cas de déformation du siège 10 engendrant un déplacement de l'actionneur 30 et donc de son pignon 31.

Comme cela est illustré par la figure 8a, en cas de déformation du siège 10 engendrant un déplacement du pignon 31 vers le haut, le pignon 31 vient en appui contre la plaquette de retenue 37 de façon à déformer vers le haut la portion de liaison 35 suivant la zone de faiblesse mécanique 36. Du fait du maintien de la position relative du pignon 31 par rapport à la crémaillère 34 grâce à la plaquette de retenue 37, on garantit l'engrènement du pignon 31 avec la crémaillère 34.

Comme cela est illustré par la figure 8b, en cas de déformation du siège 10 engendrant un déplacement du pignon 31 vers le bas, l'arbre 32 du pignon 31 vient en appui contre le fond de la rainure de guidage 40 de la plaque 38, de façon à déformer vers le bas la portion de liaison 35 suivant la zone de faiblesse mécanique 36. Du fait du maintien de la position relative du pignon 31 par rapport à la crémaillère 34 grâce à la plaque 38, on garantit l'engrènement du pignon 31 avec la crémaillère 34. En outre, la rainure 40 permet de guider efficacement le déplacement du pignon 31 par rapport à la crémaillère 34.

Dans tous les cas, les plots amortisseurs 43.1, 43.2, 43.3 absorbent une énergie mécanique de déformation de façon à limiter les contraintes subies par la crémaillère 34.

En variante, l'ensemble formé par la plaquette de retenue 37, la crémaillère 34, et la portion de liaison 35 forme une pièce rapportée fixée au rail 26 au moyen d'organes de fixation, tels que des vis, des rivets, des goujons, ou tout autre organe de fixation adapté à l'application.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

## Revendications

1. Siège d'aéronef (10) comportant:
- un rail de guidage (26),
- une crémaillère (34),
- un actionneur (30) muni d'un pignon (31) porté par un arbre (32), ledit pignon (31) engrenant avec la crémaillère (34),
- au moins une portion de liaison (35) assurant une liaison mécanique entre le rail de guidage (26) et la crémaillère (34),
**caractérisé en ce que** la portion de liaison (35) comporte une zone de faiblesse mécanique (36) et **en ce qu'**un premier élément d'appui (37) et un deuxième élément d'appui (38) sont disposés de part et d'autre de la crémaillère (34), de sorte qu'en cas de déformation du siège (10) engendrant un déplacement du pignon (31), ledit pignon (31) ou l'arbre (32) correspondant vient en appui contre un des éléments d'appui (37, 38), de façon à déformer la portion de liaison (35) suivant la zone de faiblesse mécanique (36).

2. Siège d'aéronef selon la revendication 1, **caractérisé en ce que** le premier élément d'appui (37) est une plaquette de retenue ayant une portion superposée axialement avec le pignon (31).

3. Siège d'aéronef selon la revendication 1 ou 2, **caractérisé en ce que** le deuxième élément d'appui (38) est une plaque munie d'une rainure de guidage (40) apte à assurer un guidage d'une extrémité de l'arbre (32) portant le pignon (31).

4. Siège d'aéronef selon l'une quelconque des revendications 1 à 3, **caractérisé en ce que** le deuxième élément d'appui (38), la portion de liaison (35), et le rail de guidage (26) forment une seule et même pièce (41).

5. Siège d'aéronef selon l'une quelconque des revendications 1 à 4, **caractérisé en ce que** l'actionneur (30) est fixé sur une embase (22) du siège (10) par l'intermédiaire d'au moins un plot amortisseur (43.1, 43.2, 43.3).

6. Siège d'aéronef selon la revendication 5, **caractérisé en ce qu'**un plot amortisseur (43.1) comporte une portion élastique (44) pour absorber une énergie mécanique suivant une direction verticale (Z).

7. Siège d'aéronef selon la revendication 5, **caractérisé en ce qu'**un plot amortisseur (43.2, 43.3) comporte une portion élastique annulaire (47) disposée dans une ouverture de passage d'un organe de fixation (48) de l'actionneur (30), de façon à pouvoir absorber une énergie mécanique suivant une direction longitudinale (X) et/ou une direction transversale (Y).

8. Siège d'aéronef selon l'une quelconque des revendications 1 à 7, **caractérisé en ce qu'**un organe de guidage (25) en translation comporte des rouleaux (28) coopérant chacun avec une face inclinée (29) du rail de guidage (26) ayant une section transversale en forme de V.

9. Siège d'aéronef selon l'une quelconque des revendications 1 à 8, **caractérisé en ce qu'**il comporte un dispositif de réglage en hauteur (17).

10. Siège d'aéronef selon la revendication 9, **caractérisé en ce que** le dispositif de réglage en hauteur (17) comporte deux paires de croisillons (18) munis d'extrémités coopérant avec des flasques supérieurs (19) et des flasques inférieurs (20) dudit siège (10).

11. Siège d'aéronef selon l'une quelconque des revendications 1 à 10, **caractérisé en ce que** la zone de faiblesse mécanique (36) est obtenue par un retrait local de matière dans une épaisseur de la portion de liaison (35).

12. Aéronef **caractérisé en ce qu'**il comporte un siège tel que défini selon l'une quelconque des revendications précédentes.

## Patentansprüche

1. Flugzeugsitz (10), umfassend:
- eine Führungsschiene (26),
- ein Zahnstange (34),
- einen Aktuator (30), der mit einem Ritzel (31) versehen ist, das von einer Welle (32) getragen wird, wobei das Ritzel (31) mit der Zahnstange (34) kämmt,
- mindestens einen Verbindungsabschnitt (35), der eine mechanische Verbindung zwischen der Führungsschiene (26) und der Zahnstange (34) sicherstellt,
**dadurch gekennzeichnet, dass** der Verbindungsabschnitt (35) eine Zone mechanischer Schwächung (36) umfasst und dass ein erstes Stützelement (37) und ein zweites Stützelement (38) auf beiden Seiten der Zahnstange (34) angeordnet sind, so dass im Falle einer Verformung des Sitzes (10), die eine Verschiebung des Ritzels (31) verursacht, das Ritzel (31) oder die entsprechende Welle (32) an einem der Stützelemente (37, 38) zur Anlage kommt, um den Verbindungsabschnitt (35) entlang der Zone mechanischer Schwäche (36) zu verformen.

2. Flugzeugsitz nach Anspruch 1, **dadurch gekennzeichnet, dass** das erste Stützelement (37) eine Halteplatte mit einem axial mit dem Ritzel (31) überlagerten Abschnitt ist.

3. Flugzeugsitz nach Anspruch 1 oder 2, **dadurch gekennzeichnet, dass** das zweite Stützelement (38) eine Platte mit einer Führungsnut (40) zum Führen eines Endes der das Ritzel (31) tragenden Welle (32) ist.

4. Flugzeugsitz nach einem der Ansprüche 1 bis 3, **dadurch gekennzeichnet, dass** das zweite Stützelement (38), der Verbindungsabschnitt (35) und die Führungsschiene (26) ein einziges Stück (41) bilden.

5. Flugzeugsitz nach einem der Ansprüche 1 bis 4, **dadurch gekennzeichnet, dass** der Aktuator (30) über mindestens einen Dämpfungszapfen (43.1, 43.2, 43.3) an einer Basis (22) des Sitzes (10) befestigt ist.

6. Flugzeugsitz nach Anspruch 5, **dadurch gekennzeichnet, dass** ein Dämpfungszapfen (43.1) einen elastischen Abschnitt (44) zur Aufnahme mechanischer Energie in vertikaler Richtung (Z) aufweist.

7. Flugzeugsitz nach Anspruch 5, **dadurch gekennzeichnet, dass** ein Dämpfungszapfen (43.2, 43.3) einen ringförmigen elastischen Abschnitt (47) aufweist, der in einer Durchgangsöffnung eines Befestigungselements (48) des Aktuators (30) angeordnet ist, um mechanische Energie in einer Längsrichtung (X) und/oder einer Querrichtung (Y) aufnehmen zu können.

8. Flugzeugsitz nach einem der Ansprüche 1 bis 7, **dadurch gekennzeichnet, dass** ein Translation-Führungselement (25) Rollen (28) umfasst, die jeweils mit einer geneigten Fläche (29) der Führungsschiene (26) zusammenwirken, die eine V-förmiger Querschnitt aufweist.

9. Flugzeugsitz nach einem der Ansprüche 1 bis 8, **dadurch gekennzeichnet, dass** er eine Höheneinstellvorrichtung (17) aufweist.

10. Flugzeugsitz nach Anspruch 9, **dadurch gekennzeichnet, dass** die Höheneinstellvorrichtung (17) zwei Paare von Kreuzstücken (18) umfasst, die mit Enden versehen sind, die mit oberen Flanschen (19) und unteren Flanschen (20) des Sitzes (10) zusammenwirken.

11. Flugzeugsitz nach einem der Ansprüche 1 bis 10, **dadurch gekennzeichnet, dass** die Zone mechanischer Schwächung (36) durch eine lokale Materialentfernung in einer Dicke des Verbindungsabschnitts (35) erhalten wird.

12. Flugzeug, **dadurch gekennzeichnet, dass** es einen Sitz nach einem der vorhergehenden Ansprüche umfasst.

## Claims

1. An aircraft seat (10) comprising:
- a guide rail (26),
- a rack (34),
- an actuator (30) provided with a pinion (31) carried by a shaft (32), said pinion (31) meshing with the rack (34),
- at least one connecting portion (35) ensuring a mechanical connection between the guide rail (26) and the rack (34),
**characterized in that** the connecting portion (35) comprises a zone of mechanical weakness (36) and **in that** a first support element (37) and a second support element (38) are arranged on both sides of the rack (34), so that in the event of deformation of the seat (10) causing a displacement of the pinion (31), said pinion (31) or the corresponding shaft (32) comes to rest against one of the support elements (37, 38), so as to deform the connecting portion (35) along the zone of mechanical weakness (36).

2. The aircraft seat according to Claim 1, **characterized in that** the first support element (37) is a retaining plate having a portion axially superposed with the pinion (31).

3. The aircraft seat according to Claim 1 or 2, **characterized in that** the second support element (38) is a plate provided with a guide groove (40) capable of guiding one end of the shaft (32) carrying the pinion (31).

4. The aircraft seat according to any one of the claims 1 to 3, **characterized in that** the second support element (38), the connecting portion (35), and the guide rail (26) form one piece (41).

5. The aircraft seat according to any one of the claims 1 to 4, **characterized in that** the actuator (30) is fixed to a base (22) of the seat (10) via at least one damping stud (43.1, 43.2, 43.3).

6. The aircraft seat according to Claim 5, **characterized in that** a damping stud (43.1) comprises an elastic portion (44) for absorbing mechanical energy in a vertical direction (Z).

7. The aircraft seat according to Claim 5, **characterized in that** a damping stud (43.2, 43.3) comprises an annular elastic portion (47) disposed in a passage opening of a fixing member (48) of the actuator (30), so as to be able to absorb mechanical energy in a longitudinal direction (X) and/or a transverse direction (Y).

8. The aircraft seat according to any one of the claims 1 to 7, **characterized in that** a translational guiding member (25) comprises rollers (28) each cooperating with an inclined face (29) of the guide rail (26) having a V-shaped cross-section.

9. The aircraft seat according to any one of the claims 1 to 8, **characterized in that** it comprises a height adjustment device (17).

10. The aircraft seat according to Claim 9, **characterized in that** the height adjustment device (17) comprises two pairs of cross-pieces (18) provided with ends cooperating with upper flanges (19) and lower flanges (20) of said seat (10).

11. The aircraft seat according to any one of the claims 1 to 10, **characterized in that** the zone of mechanical weakness (36) is obtained by a local removing of material in a thickness of the connecting portion (35).

12. An aircraft **characterized in that** it comprises a seat as defined according to any one of the preceding claims.
